# EUROPÄISCHE PATENTANMELDUNG

(11) **EP 2 492 840 A1**
(43) Veröffentlichungstag der Anmeldung: **29.08.2012**
(21) Anmeldenummer: 12155077.6
(22) Anmeldetag: 13.02.2012
(51) Int. Cl.: G06K 7/10, G06K 19/06

(54) **Anordnung zur Erkennung von strichkodierter Information**

(30) Priorität: 22.02.2011 DE 102011004497
(71) Anmelder: Kaltenbach & Voigt GmbH, 88400 Biberach (DE)
(72) Erfinder: Heckenberger, Hans, 88433 Aßmanshardt (DE)
(74) Vertreter: Thun, Clemens

(57) **Zusammenfassung**

Die vorliegende Erfindung betrifft eine Anordnung zur Erkennung von strichkodierter Information (200) auf einem Trägerobjekt (300), mit Erfassungsmitteln (100), die dazu ausgebildet sind, strichkodierte Information (200) in einem Erfassungsbereich (110) zu erfassen, wobei die Anordnung Anpassungsmittel aufweist, die dazu ausgebildet sind, den Erfassungsbereich (110) zu verändern. Weitere Erfindungsaspekte richten sich auf eine Anordnung zur Erkennung von strichkodierter Information (200) auf einer Spraydose (350), ein Verfahren zur Informationserkennung auf einer Spraydose (350), ein medizinisches Pflegegerät sowie auf ein Verfahren zur Pflege von medizinischen Geräten.

## Beschreibung

Die vorliegende Erfindung betrifft eine Anordnung zur Erkennung von strichkodierter Information auf einem Trägerobjekt. Eine derartige Anordnung kann insbesondere in einem Gerät zum Pflegen und/oder Desinfizieren medizinischer, insbesondere zahnmedizinischer Instrumente zum Einsatz kommen, um von diesem Gerät zu verwendende Reinigungs- oder Pflegemittel zu identifizieren.

Zahnärztliche Instrumente bedürfen zur Aufrechterhaltung ihrer Funktion von Zeit zu Zeit der Pflege, insbesondere im Fall von drehbar gelagerten Antriebselementen. Ferner führen die in der zahnärztlichen Praxis immer weiter ansteigenden Hygieneanforderungen dazu, dass eine Aufbereitung von zahnärztlichen Instrumenten in regelmäßigen zeitlichen Abständen zu erfolgen hat. Die erfolgreiche Aufbereitung und Einhaltung der entsprechenden Vorgaben muss hierbei durch den Zahnarzt lückenlos dokumentiert werden, was einen nicht unerheblichen personellen und organisatorischen Aufwand nach sich zieht.

Zwischenzeitlich existieren auf dem Markt allerdings Reinigungs- und Desinfektions-Geräte, in denen die Instrumente aufbereitet werden, bevor sie beispielsweise einer Ölpflege unterzogen werden. Die maschinelle Aufbereitung bringt deutliche Vorteile gegenüber einem manuellen Pflegen der Instrumente mit sich, da nur ein maschinelles Verfahren eine sichere und reproduzierbare Reinigung und Pflege ermöglicht. In jedem Fall muss der Pflegevorgang und insbesondere das Pflegemittel an das zu pflegende zahnärztliche Instrument angepasst sein.

Mit Hilfe von Strichkodes ist es möglich vielfältige Markierungen vorzunehmen. Die Auswertung dieser Markierungen eröffnet die Möglichkeit, auf Basis der Markierung zugeordnete Abläufe auszuführen, beispielsweise das Buchen eines bestimmten Betrages auf eine Gesamtrechnung an der Supermarktkasse oder das Erfassen eines Zeitwertes, wenn eine zugeordnete Markierung erkannt wird.

Gewöhnlich sind die strichkodierten Informationen in kompakter Form auf dem zu markierenden Trägerobjekt aufgebracht. In vielen Fällen sind dazu dedizierte Flächen auf dem Trägerobjekt vorgesehen. Besonders schwierig gestaltet sich die Auswertung der Markierung jedoch, wenn die Oberflächen der zu markierenden Trägerobjekte vornehmlich nicht ebene Flächen aufweisen. Insbesondere ist diese Schwierigkeit häufig auch bei Behältern für Pflegemittel zur Pflege von medizinischen insbesondere zahnärztlichen Instrumenten gegeben.

Lesegeräte für Strichkodes nach dem Stand der Technik werten die optische Antwort einer beleuchteten strichkodierten Information aus. Dazu muss eine Signalerfassungseinheit die Beleuchtungsantwort der strichkodierten Information in einem Erfassungsbereich erfassen und bewerten.

Eine gängige Vorrichtung sieht vor, ein Anregungssignal, insbesondere ein Lasersignal, über einen Bereich der strichkodierten Information mit vorgegebener Frequenz so zu lenken, dass ein Erfassungsbereich mit dem optischen Anregungssignal vollständig überdeckt ist, aus dem die strichkodierte Information gelesen wird. Die Auswertung der optischen Antwort erfolgt dann in zeitsynchroner Weise zu der Anregung, sodass nach Auswertung der Synchronitätsinformation in Verbindung mit der optischen Antwort eine Bewertung der strichkodierten Information erfolgen kann.

Darüberhinaus sind auch Bildauswertesysteme bekannt, die eine optische Antwortinformation, beispielweise mit Hilfe eines CCD-Sensors (charge coupled device) in einem bestimmten Erfassungsbereich ermittelt, analysieren und so die in dem Erfassungsbereich auf dem Trägerobjekt angeordnete strichkodierte Information erfassen. Ein zeitlich sequenziertes Anregungssignal ist in diesem Fall zur Bewertung der strichkodierten Information nicht notwendig, da eine Erfassung der Gesamtinformation in dem Erfassungsbereich unmittelbar mit Hilfe des CCD-Sensors möglich ist. Somit kann die Anregung, beispielsweise - im Gegensatz zu einer Anregung mit einem Laser - örtlich wenig beschränkt, mit Hilfe einer oder mehrerer LEDs erfolgen, die den gesamten Erfassungsbereich beleuchten.

Bei all diesen Systemen kann es im Fall von komplex geformten Oberflächen - wie sie beispielsweise durch zylindrisch geformte Behälter für Pflegemittel gegeben sind - vorkommen, dass aufgrund der verzerrten optischen Antwort derartiger Oberflächen verstärkt Signalfehler hervorgerufen werden, weil beispielsweise Abstände oder Linienbreiten in einer komplexen Anordnung nur schwer bestimmt werden können, bzw. allgemein eine Bewertung von Formen nicht möglich ist.

Eine Aufgabe der vorliegenden Erfindung ist es dementsprechend, die Möglichkeiten zur Erkennung von strichkodierter Information auf einem Trägerobjekt, insbesondere mit komplexer Form, vorzugsweise auf einem Behälter für Pflegemittel zur Pflege medizinischer bzw. zahnärztlicher Instrumente, zu verbessern und gleichzeitig eine kostengünstige Lösung anzugeben.

Diese Aufgabe wird mit Hilfe der Merkmale des Anspruchs 1 gelöst. Weiterbildungen der Erfindung sind Gegenstand der abhängigen Ansprüche.

Erfindungsgemäß ist eine Anordnung zur Erkennung von strichkodierter Information auf einem Trägerobjekt vorgesehen, mit Erfassungsmitteln, die dazu ausgebildet sind, strichkodierte Information in einem Erfassungsbereich zu erfassen. Darüberhinaus umfasst die Anordnung Anpassungsmittel, die dazu ausgebildet sind, den Erfassungsbereich zu verändern.

Zur Erfassung einer strichkodierten Information ist es notwendig eine zusammenhängende Information zu bewerten bzw. auszuwerten und beispielsweise Start oder Stoppzeichen eines Strichkodes zu erkennen. Der erfindungsgemäße Erfassungsbereich weist also wenigstens die Ausdehnung einer bewertbaren strichkodierten Information auf und erfindungsgemäß ist nunmehr vorgesehen, den Erfassungsbereich zu verändern.

Dies bringt beispielsweise die Möglichkeit mit sich, den Erfassungsbereich an die Oberflächeneigenschaften des Trägerobjekts - bevorzugt an einen Behälter für Pflegemittel zur Pflege medizinischer Instrumente - anpassen zu können. Beispielsweise kann der Erfassungsbereich in der Lage aber auch in der Form verändert sein.

Die Veränderung des Erfassungsbereichs kann beispielsweise in einer Weiterbildung des Erfindungsgedankens dadurch verwirklicht sein, dass die Anpassungsmittel dazu ausgebildet sind, die räumliche Anordnung der Erfassungsmittel zu variieren. Beispielsweise kann die Entfernung gegenüber dem Trägerobjekt geändert sein, der Raumwinkel der Orientierung gegenüber dem Trägerobjekt kann modifiziert sein, oder allgemein, der Ort der Erfassungsmittel kann variiert sein. Darüberhinaus ist ebenfalls nicht ausgeschlossen, dass dies bei einer Vielzahl von einzelnen Erfassungsmitteln realisiert ist.

Besonders vorteilhaft ist, wenn die Erfassungsmittel dazu ausgebildet sind, mehrere Elemente einer strichkodierten Information gleichzeitig zu erfassen. Beispielsweise kann es sich dabei um mehrere bewertbare Bereiche eines Strichkodes handeln. Insbesondere ist damit eine Möglichkeit eröffnet, die Fehlererkennung zu verbessern. So lassen sich beispielsweise Redundanzinformationen gewinnen, welche zur Fehlerkorrektur ausgewertet werden können.

Eine Weiterentwicklung des Erfindungsgedankens, die das Redundanzkonzept ebenfalls unterstützt, kann beispielsweise auch dadurch realisiert sein, dass sich die Erfassungsbereiche vor und nach der Veränderung mit Hilfe der Anpassungsmittel wenigstens teilweise überlappen.

In einer bevorzugten Weiterbildung der Erfindung sind die Anpassungsmittel dazu ausgebildet, die Erfassungsmittel in einem Winkelbereich α zu drehen bzw. zu schwenken. Vorzugsweise folgt die Schwenkbewegung wenigstens abschnittsweise der Oberflächenform des Trägerobjekts - vorzugsweise der Oberflächenform eines Behälters für Pflegemittel zur Pflege medizinischer bzw. zahnärztlicher Instrumente. Jedoch ist die Erfindung nicht darauf beschränkt. Beispielsweise kann es der Senkung einer Lesefehlerrate dienlich sein, wenn die Anordnung zur Erkennung einer strichkodierten Information dazu ausgebildet ist, den Abstand der Erfassungsmittel zur Oberfläche des Trägerobjekts - beispielsweise eines Behälters für Pflegemittel - zu verändern. Insbesondere bei komplexen Oberflächenformen des Trägerobjekts, die möglicherweise Vorsprünge aufweisen, ist es vorteilhaft, auf diesem Weg die verzerrungsbehaftete strichkodierte Information unter einem anderen Winkel aufzulösen bzw. optisch zu bewerten.

Ein Ausführungsbeispiel sieht vor, dass die Anpassungsmittel einen Servomotor umfassen, der dazu ausgebildet ist, die Erfassungsmittel zu bewegen. Beispielsweise ist es im Modellbau üblich, Steuerungsanforderungen mit Hilfe von Stellmotoren - sogenannten Servomotoren - auszuführen, die als vorgefertigte Baugruppen bzw. als Kombination aus Elektromotor und zugehörigem Getriebe erhältlich sind, sodass sich präzise Bewegungen mit hoher Stellkraft ausführen lassen.

Besonders bevorzugt umfassen die Erfassungsmittel einen Barcodescanner, der insbesondere eine CCD-Leseeinheit aufweist. Diesem ist beispielsweise ein Erfassungsbereich zugeordnet, der durch die CCD-Optik festgelegt ist. Vorzugsweise ist der Barcodescanner bzw. sind die Erfassungsmittel in einem eigenständigen Gehäuse angeordnet. Jedoch ist die Erfindung in keinster Weise auf den Einsatz von CCD-basierten Barscodescannern beschränkt. Beispielsweise ist es ebenso denkbar Laserscanner, auch in omnidirektionaler Form, oder anders geartete Erfassungsmittel mit einem Erfassungsbereich, der eine bewertbare strichkodierte Information auf einem Trägerobjekt umfasst, in einem Ausführungsbeispiel der Erfindung vorzusehen.

In einer Weiterbildung des Erfmdungsgedankens ist die Anordnung zur Erkennung einer strichkodierten Information dazu ausgebildet, zweidimensional-strichkodierte Informationen zu erfassen und auszuwerten. Vorzugsweise ist dies dadurch realisiert, dass zunächst durch die Erfassungsmittel eine eindimensional strichkodierte Information gelesen bzw. erfasst wird und die Anpassungsmittel dazu ausgebildet sind, den Erfassungsbereich in der Art zu verändern, dass aus mehreren eindimensional kodierten Informationen eine zweidimensional-strichkodierte Information kombiniert werden kann.

Ein Behälter für ein Pflegemittel zur Pflege zahnärztlicher bzw. medizinischer Instrumente kann beispielsweise durch eine Spraydose verwirklicht sein.

Ein weiterer Aspekt der Erfindung betrifft deshalb eine Anordnung zur Informationserkennung auf einem Behälter für ein Pflegemittel zur Pflege zahnärztlicher bzw. medizinischer Instrumente, insbesondere einer Spraydose, mit einem Behälter für ein Pflegemittel zur Pflege zahnärztlicher bzw. medizinischer Instrumente, bevorzugt einer Spraydose und einer erfindungsgemäßen Anordnung zur Erkennung von strichkodierter Information. Die Oberfläche des Behälters, insbesondere der Spraydose, kann in diesem Fall im Wesentlichen nicht ebene Flächen aufweisen. Beispielsweise ist dies im Bereich der Mantelfläche der Spraydose gegeben, sodass dort eine Erkennung von strichkodierter Information aufgrund möglicher Verzerrungen besonders fehlerbehaftet sein kann.

Vorzugsweise ist die auf der Spraydose angeordnete strichkodierte Information wenigstens teilweise eine Anordnung aus konzentrischen Ringen, besonders bevorzugt ist das gemeinsame Zentrum der Ringe identisch mit dem Mittelpunkt des Querschnitts der Spraydose.

In einem Ausführungsbeispiel der Erfindung ist die auf dem Behälter bzw. der Spraydose angeordnete strichkodierte Information eine zweidimensional-strichkodierte Information bzw. weist Bereiche auf, die eine redundante Informationsauswertung ermöglichen. Eine Erfassung der zweidimensional-strichkodierten Information kann dann nach einem bereits angedeuteten Verfahren erfolgen, die vorteilhafte Erfassung von Redundanzinformation ist in einem nachfolgend beschriebenen Verfahren dargelegt.

Ein weiterer Aspekt der Erfindung betrifft ein Verfahren zur Informationserkennung auf einem Behälter für ein Pflegemittel zur Pflege zahnärztlicher bzw. medizinischer Instrumente, insbesondere einer Spraydose mit einer erfmdungsgemäßen Anordnung zur Informationserkennung auf einem Behälter für Pflegemittel zur Pflege zahnärztlicher bzw. medizinischer Instrumente, das folgende Schritte umfasst.
A) Erkennung einer strichkodierten Information in einem auf dem Behälter, bevorzugt der Spraydose angeordneten Erfassungsbereich und Bewertung der Gültigkeit der Information;
B) Veränderung des Erfassungsbereichs auf dem Behälter, insbesondere der Spraydose, falls in Schritt A) keine gültige Information erkannt wurde;
C) Wiederholung der Schritte A) und B) solange, bis eine gültige Information erkannt wird oder keine weitere Veränderung des Erfassungsbereichs möglich ist.

In einer Weiterbildung des Verfahrens ist vorgesehen, dass die Veränderung des Erfassungsbereichs auf dem Behälter, bevorzugt der Spraydose, durch Drehen der Erfassungsmittel erfolgt.

Wie in vorstehender Beschreibung bereits angedeutet, ist der Aspekt einer eindeutigen Erfassung von strichkodierten Informationen für medizinische Anwendungen besonders wichtig, um insbesondere Nachteile für Patienten abzuwenden. Somit ist obiges Verfahren insbesondere in der Medizintechnik vorteilhaft einsetzbar. Dies wird beispielsweise durch nachfolgend beschriebene Vorrichtung deutlich.

Ein weiterer Aspekt der Erfindung betrifft ein medizinisches Pflegegerät, zur Pflege von medizinischen, insbesondere zahnmedizinischen Geräten mit einer erfindungsgemäßen Anordnung zur Informationserkennung auf einem Behälter für Pflegemittel zur Pflege zahnärztlicher bzw. medizinischer Instrumente, insbesondere einer Spraydose. Dabei ist eine durch die Anordnung zur Erkennung einer strichkodierten Information ausgelesene Information eine Steuerungsinformation zur Durchführung eines Pflegevorgangs für medizinische, insbesondere zahnmedizinische Geräte.

Somit ist durch die Verbesserung der Informationserfassung mit einer erfindungsgemäßen Anordnung zur Erfassung von strichkodierter Information, ein wesentlicher Beitrag zur Verbesserung der Pflege medizinischer Geräte und damit der Verbesserung der medizinischen Behandlung erzielt. Insbesondere können dabei Fehler in der hygienischen Aufbereitung von medizinischen Instrumenten vermieden werden. Beispielsweise trägt dazu auch nachfolgend beschriebenes Verfahren bei.

Ein weiterer Aspekt der Erfindung betrifft ein Verfahren zur Pflege von medizinischen Geräten bzw. Instrumenten, mit einem erfindungsgemäßen medizinischen Pflegegerät, wobei die strichkodierte Information ein Pflegemittel für medizinische, insbesondere zahnmedizinische Geräte bzw. Instrumente identifiziert und auf Basis des identifizierten Pflegemittels ein zugeordneter Pflegeablauf für medizinische bzw. zahnmedizinische Geräte bzw. Instrumente ausgewählt wird.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
- Fig. 1: ein Ausführungsbeispiel einer erfmdungsgemäßen Anordnung zur Erkennung von strichkodierter Information auf einem Trägerobjekt;
- Fig. 2: Beispiele für eine Veränderung eines Erfassungsbereichs von Erfassungsmitteln für Strichkodes;
- Fig. 3: die Kombination eines Barcodescanners mit einem Servomotor;
- Fig. 4: ein Ausführungsbeispiel einer erfindungsgemäßen Anordnung zur Erkennung von strichkodierter Information auf einer Spraydose; und
- Fig. 5: eine vorteilhafte Anordnung von Strichkodes auf einem zylindrischen Trägerobjekt.

Eine besondere Herausforderung ist es, auf komplex geformten Flächen, wie beispielsweise auf einem Behälter für Pflegemittel zur Pflege medizinischer bzw. zahnärzlicher Instrumente, welche beispielsweise Rundungen oder Vorsprünge aufweisen, eine strichkodierte Information 200 zuverlässig zu erkennen. Insbesondere erweist es sich unter diesen Umständen als schwierig, Abstände und Linienstärken auszuwerten, um die kodierte Information 200 korrekt wiederzugeben. Besonders bei medizinischen Anwendungen kann dann eine fehlerhaft erkannte Information zu starken Nachteilen für den Patienten führen, beispielsweise kann das die hygienische Aufbereitung von zahnmedizinischen Geräten bzw. Instrumenten betreffen.

Die vorliegende Erfindung gibt eine kostenoptimierte Lösung für eine verbesserte Ausleserate von strichkodierter Information 200 insbesondere auf Flächen der vorbeschriebenen Art an.

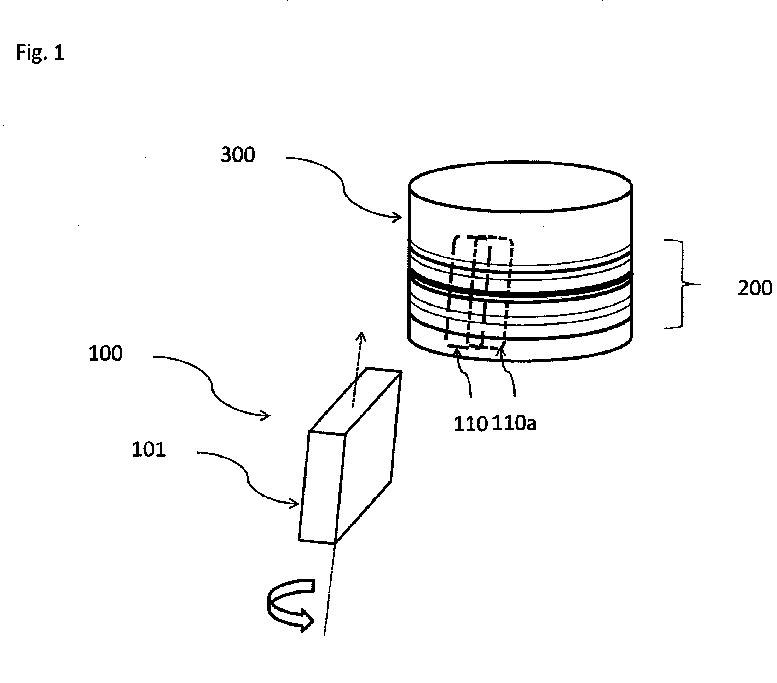

Wie in Figur 1 gezeigt, sind Erfassungsmittel 100 für strichkodierte Informationen 200, vorzugsweise in einem eigenständigen Gehäuse 101, in der Anordnung zur Erkennung einer strichkodierten Information 200 vorgesehen.

Beispielsweise können Erfassungsmittel 100 in Frage kommen, die einen Erfassungsbereich 110 aufweisen, der wenigstens die Ausdehnung hat, um eine strichkodierte Information bewerten zu können. Vorzugsweise kann es sich bei den Erfassungsmitteln 100 um bekannte Strichkodelesevorrichtungen handeln, die einen genormten Strichkode als zusammenhängende Information erkennen, vorzugsweise einen oder mehrere der Kodes EAN, UPC, IAN, JAN, Zielkode, Kode der 2/5-Familie, Code 39, Code 93, Code 128, oder Codebar. Weiterhin ist darauf hinzuweisen, dass erfindungsgemäß nicht ausgeschlossen ist, dass die strichkodierte Information wenigstens teilweise Bereiche aufweist, die eine Kodierung in einer Weiterentwicklung von Strichkodes tragen, also beispielsweise die Information durch rautenförmige, punkteförmige oder quadratische Strukturen kodieren.

Figur 1 zeigt Erfassungsmittel 100 in Form eines CCD-Barcodelesers, mit einem Erfassungsbereich 110, der in Teilbereichen mit einer strichkodierten Information 200 überlappt. Die strichkodierte Information 200 liegt in diesem Fall als strichkodierte Information im Erfassungsbereich 110 wenigstens in einer Dimension vollständig vor und kann dementsprechend zusammenhängend und vollständig von den Erfassungsmitteln 100 in dieser Dimension erfasst werden, sodass eine Bewertung der Information möglich ist. Es ist zur Bewertbarkeit einer strichkodierten Information vorzugsweise davon auszugehen, dass die strichkodierte Information wenigstens zwei Elemente umfasst, die zueinander unterschiedlich sind und so der Erfassungsbereich beispielsweise zwei Elemente der strichkodierten Information 200 aufweist, die zueinander unterschiedlich sind.

In einer Weiterbildung sind die Erfassungsmittel 100 dazu ausgebildet, Information über mehrere Elemente der im Erfassungsbereich 110 angeordneten strichkodierten Information 200 bei einem Informationsaustauschvorgang mit Auswertemitteln zur Verfügung zu stellen. Dies ermöglicht es ebenso, den Erfolg des Lesevorgangs einer oder mehrerer strichkodierter Informationen unmittelbar zu beurteilen bzw. zu bewerten.

Beispielsweise kann vorgesehen sein, dass die Anordnung zur Erkennung von strichkodierter Information 200 auf einem Trägerobjekt 300 Auswertemittel aufweist, die dazu ausgebildet sind, ein oder mehrere Elemente einer strichkodierten Information 200 zu beurteilen.

Die Erfindung beruht auf dem Gedanken bei unzureichender Erkennung der Information 200 den Erfassungsbereich 110 der Erfassungsmittel 100 zu variieren. Dazu weist die bevorzugt in ein medizinisches Pflegegerät integrierte Anordnung Anpassungsmittel auf, die dazu ausgebildet sind, den Erfassungsbereich 110 zu verändern.

Dabei kann es sich vorzugsweise um eine örtliche Veränderung des Erfassungsbereichs 110 handeln, aber auch die Form des Erfassungsbereichs 110 oder auch dessen Flächenausdehnung kann durch die Anpassungsmittel beeinflusst sein. Insbesondere bei komplex geformten Flächen bedingt eine räumliche Veränderung der Erfassungsmittel 100 gegenüber dem Trägerobjekt 300 der strichkodierten Information 200 eine gleichzeitige Modifikation all dieser Parameter des Erfassungsbereichs 110. Jedoch kann die Veränderung des Erfassungsbereichs 110 auch geänderte Reflexionseigenschaften wie zum Beispiel die Reflexionsrichtung bzw. Reflexionsintensität der Trägerobjektoberfläche, insbesondere eines Behälters für Pflegemittel zur Pflege zahnärztlicher bzw. medizinischer Instrumente in dem Erfassungsbereich 110 betreffen.

Den Erfassungsmitteln 100 ist dabei ein Bereich mit einer für die jeweilige Art der Erfassungsmittel 100 charakteristischen Erfassungsbereichsform zugeordnet, beispielsweise ein Rechteck, eine Ellipse oder ein Strich, aus dem die strichkodierte Information 200 bestimmt werden soll. Die Projektion dieser Erfassungsbereichsform auf die Oberfläche des Trägerobjekts 300 bestimmt dabei die optische Antwort der Trägerobjektoberfläche, somit die erfasste strichkodierte Information 200 und auch die Form und Fläche des Erfassungsbereichs 110.

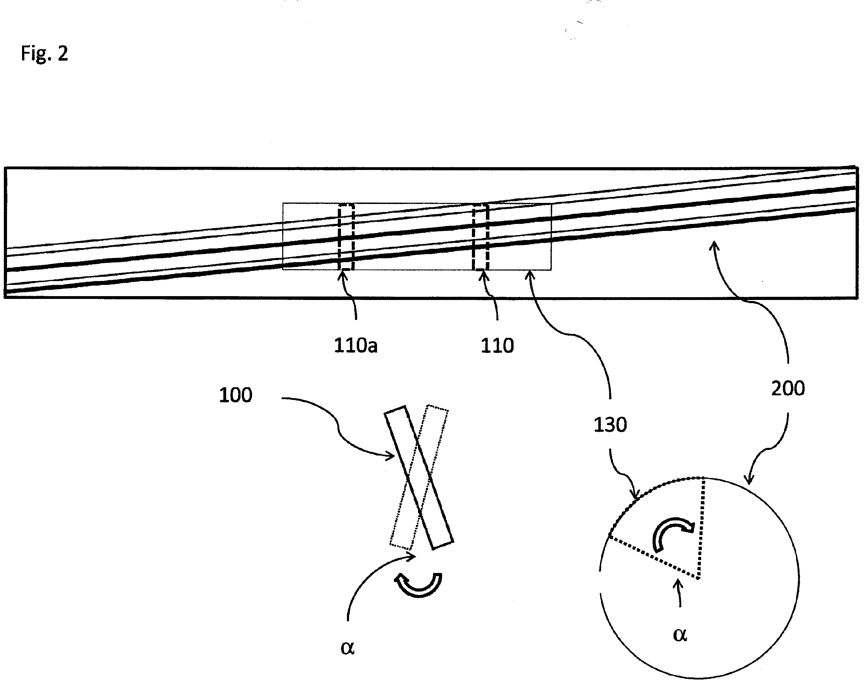

Im Falle eines zylindrisch geformten Trägerobjekts 300, wie beispielsweise für einen Behälter für Pflegemittel in Figur 2 dargestellt ist, bedeutet eine Drehung der Erfassungsmittel 100 um einen Winkel α die Veränderung des Erfassungsbereichs 110 auf einen Erfassungsbereich 110a, wobei letzterer in diesem Ausführungsbeispiel örtlich getrennt von dem Erfassungsbereich 110 ist. Jedoch ist auch vorstellbar, dass der vor Beginn der Veränderung der Anordnung zugeordnete Erfassungsbereich 110 mit dem Erfassungsbereich 110a nach der Veränderung örtlich überlappt. Mit Drehung der Erfassungsmittel 100 um einen Winkel α, ändert sich auch die Projektion der charakteristischen Erfassungsbereichsform auf die Oberfläche des Trägerobjekts 300 bzw. des Behälters, sodass sowohl die örtliche Lage als auch die Größe des Erfassungsbereichs 110a nach der Veränderung sich gegenüber dem Erfassungsbereich 110 vor Beginn der Veränderung unterscheiden können.

Vorzugsweise kann die Größe des erwähnten Erfassungsbereichs 110a gegenüber dem Erfassungsbereich 110 erhöht sein.

Als Vorteil erweist es sich, dass die Erfassungsmittel 100, in diesem Ausfdhrungsbeispiel durch die Drehung um kleine Winkel α, dazu ausgebildet sind, die Entfernung zwischen Oberfläche des Trägerobjekts 300 bzw. des Behälters für Pflegemittel und den Erfassungsmitteln 100 zu verändern.

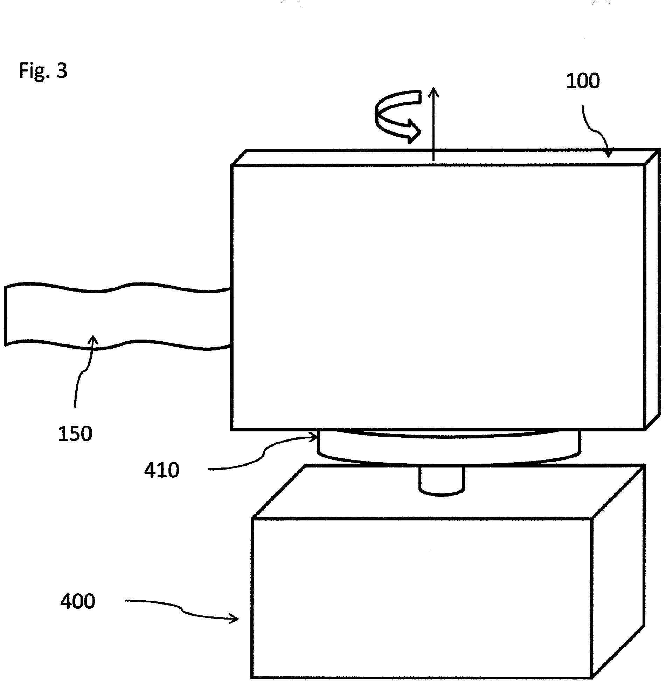

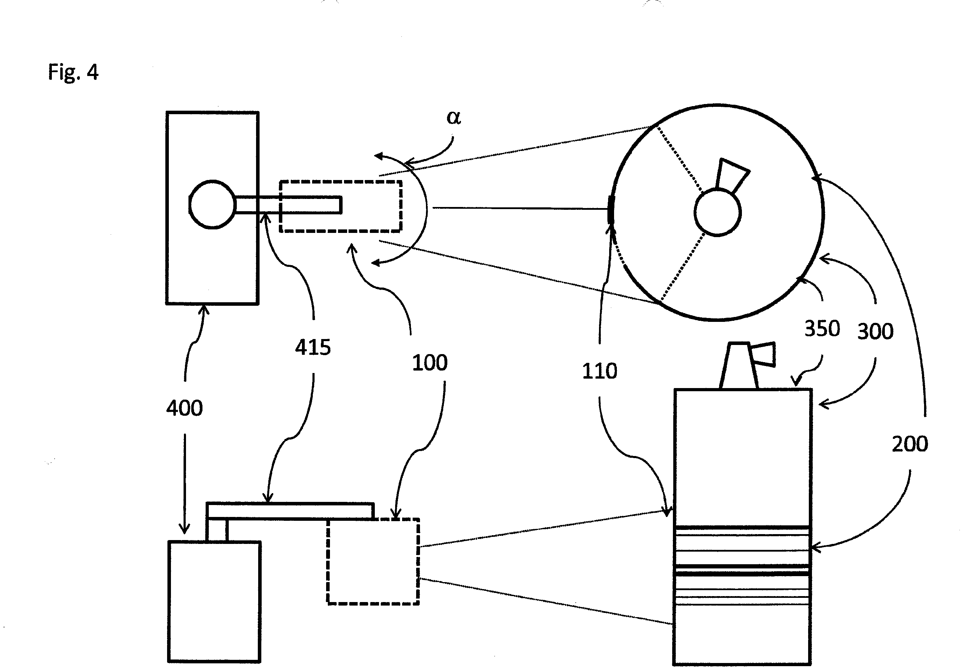

In einer in den Figuren 3 und 4 dargestellten Weiterbildung des Erfmdungsgedankens ist vorgesehen, dass die Anordnung zur Erkennung von strichkodierter Information 200 auf einem Trägerobjekt 300 einen Servomotor 400 aufweist, der beispielsweise eine Kombination aus Elektromotor und Getriebe in einem eigenständigen Gehäuse zur Verfügung stellt. Insbesondere kann es sich dabei um einen Servomotor 400 handeln, der beispielsweise beim Bau von elektrisch gesteuerten Funktionsmodellen Verwendung findet. Dies vereint die Möglichkeit einer kostengünstigen Beschaffung einer Motor-Getriebekombination mit einer präzisen Auslegung für vorgegebene Bewegungsstrecken der Erfassungsmittel 100; beispielsweise kann so die Konstruktion eigenständiger Getriebe vermieden werden. Ein weiterer Vorteil dieser Motoren ist ferner darin zu sehen, dass Servomotoren der genannten Art vorzugsweise dazu ausgebildet sind, in einem begrenzten Winkelbereich zu arbeiten, dass also Laufintervalle zwischen einer Start- und Stopp-Position vorgegeben sind; beispielsweise ist darüberhinaus eine Position bzw. Drehwinkel innerhalb des Laufintervalls durch einen zur Steuerung vorgesehenen Wert einer Steuerspannung einstellbar.

Alternativ könnte auch vorgesehen sein, einen Schrittmotor zu verwenden.

Darüberhinaus sind im Modellbau unterschiedliche Befestigungs- bzw. Anlenkungsmittel für Steuerungsfunktionen üblich, welche leicht in Anpassungsmittel der erfindungsgemäßen Anordnung integriert werden können. Beispielsweise kann es sich bei diesen Mitteln um eine Taumelscheibe 410, eine Anlenkungsstange 415 oder eine Schubstange handeln, die mit den Erfassungsmitteln 100 oder einem Einschub bzw. Halterung für Erfassungsmittel 100 verbindbar ausgebildet sind. Selbstverständlich können diese Mittel ebenso mit dem Servomotor 400 bzw. einem entsprechenden Schrittmotor verbunden sein.

Die erfindungsgemäß vorgesehene Veränderung des Erfassungsbereichs 110 bringt dabei vielfältige Vorteile mit sich, welche die Erfassungsrate für strichkodierte Informationen 200 drastisch erhöhen.

Zum Beispiel bietet die Veränderung des Erfassungsbereichs 110 zu einem Erfassungsbereich 110a die Möglichkeit in dem Erfassungsbereich 110 enthaltene Fehler oder Defizite der strichkodierten Information 200 mit Hilfe von redundanten strichkodierten Informationen 200 in dem Bereich 110a zu umgehen, um eine fehlerfreie Gesamtinformation zu bilden. Unterstützt wird dies vorzugsweise durch im Weiteren beschriebene Anordnungsmöglichkeiten der strichkodierten Information 200.

Darüberhinaus kann bereits eine geringfügige Veränderung des Erfassungsbereichs 110 zu einem Erfassungsbereich 110a, die beispielsweise mit im Wesentlichen überlappenden Erfassungsbereichen 110 und 110a einhergeht, eine Optimierung der Informationserkennung bewirken, da Reflexionseigenschaften der Trägeroberfläche verändert zur Informationsgewinnung benutzt werden können. Dabei sind im Wesentlichen überlappende Erfassungsbereiche 110, 110a so aufzufassen, dass die Erfassungsbereiche 110 und 110a durch eine Transformation eines Randlinienabschnitts in einander überführt werden können, der weniger als vier Fünftel der Randlinie des Erfassungsbereichs 110 bemisst.

Eine bevorzugte Ausführungsform kann auch vorsehen, dass die Anpassungsmittel lediglich die Orientierung der Erfassungsmittel 100 gegenüber dem Erfassungsbereich 110 modifizieren, sodass hauptsächlich Reflexionseigenschaften des Erfassungsbereichs 110 verändert sind. Dies bedingt in vielen Fällen bereits eine Verbesserung der Erkennung der strichkodierten Information 200.

Mit Hilfe der Veränderung des Erfassungsbereichs 110 ist ferner eine Möglichkeit geschaffen, zweidimensional-strichkodierte Informationen auszulesen. Vorzugsweise ist die Anordnung zur Erkennung von strichkodierter Information dann dazu ausgebildet, zweidimensional-strichkodierte Informationen zu erfassen bzw. zu bewerten. Beispielsweise könnte die redundante Information zur Fehlerkorrektur in einer zweidimensional kodierten Form gegeben sein, sodass die Anordnung über Auswertemittel verfügen kann, die zur Fehlerkorrektur mit Hilfe einer zweidimensional-kodierten Information ausgebildet sind.

Insbesondere kann vorgesehen sein, dass die Erfassungsmittel 100 dazu ausgebildet sind, eine eindimensional strichkodierte Information zu erfassen und die Anordnung zur Erfassung von strichkodierter Information dazu ausgebildet ist, durch Veränderung des Erfassungsbereichs 110 zu einem Erfassungsbereich 110a die Erfassung der zweidimensional-strichkodierten Information 200 zu komplettieren. Insbesondere kann dazu auch eine mehrfache Veränderung des Erfassungsbereichs 110 vorgesehen sein.

Figur 4 zeigt eine Anordnung zur Informationserkennung auf einer Spraydose 350 mit einer erfindungsgemäßen Anordnung zu Erkennung von strichkodierter Information auf einem Trägerobjekt 300, wie sie beispielsweise in ein zahnärztliches Pflegegerät eingebaut sein kann. Die Spraydose 350 bevorratet dabei ein oder mehrere Pflegemittel zur Pflege zahnärztlicher bzw. medizinischer Instrumente. Bevorzugt weist die strichkodierte Information 200 eine optimierte Anordnung mit Redundanzbereichen auf.

Insbesondere kann ein Redundanzbereich auch dadurch festgelegt sein, dass die strichkodierte Information 200 eine räumliche Ausdehnung aufweist, die wesentlich größer als die Fläche des Erfassungsbereichs 110 ist. Wesentlich bedeutet in diesem Zusammenhang, dass die räumliche Ausdehnung beispielsweise doppelt so groß wie der Erfassungsbereich 110, vorzugsweise 100 mal so groß, besonders bevorzugt 1000 mal so groß ist.

Speziell bei komplexen Formen - wie beispielsweise der Spraydose 350 - kann vorgesehen sein, dass die Anordnung der Striche der strichkodierten Information 200 wenigstens zwei räumlich getrennte Bereiche aufweist, die bevorzugt aus verschiedenen Winkeln beleuchtet, eine identische Information wiedergeben. Insbesondere ist denkbar, dass Strichmuster der strichkodierten Information der beiden Bereiche disjunkt sind und darüberhinaus beispielsweise eine zweidimensional-strichkodierte Information repräsentieren, aber auch, dass die Strichmuster zusammenhängend gestaltet sind.

In einer Weiterbildung des Erfindungsgedankens sind die Strichmuster der strichkodierten Information 200 der Oberflächenform des Trägerobjekts 300, bevorzugt der Oberflächenform des Behälters für Pflegemittel zur Pflege von medizinischen bzw. zahnärztlichen Instrumenten angepasst. Beispielsweise kann vorgesehen sein, dass die Anordnung der Striche Verzerrungen berücksichtigt, die bei einem Auslesevorgang, mit einer optischen Erfassung der Information unter einem bestimmten Winkel, aufgrund der Oberflächenform zu erwarten sind. Beispielsweise sind dies Formen der Bildfeldwölbung oder astigmatische Verzeichnungen.

Für den Fall des dargestellten Ausführungsbeispiels von Figur 4 mit gerundeten Formen kann dies beispielsweise bedeuten, dass Striche bzw. Elemente einer strichkodierten Information 200 entlang einer Rundung orientiert sind. Besonders vorteilhaft erweist es sich, wenn, entsprechend dem gezeigten Ausführungsbeispiel, bei zylindrischen Formen des Trägerobjekts 300 die Strichmuster der strichkodierten Information 200 dem kreis- oder näherungsweise ellipsenförmigen Querschnitt des Zylinders folgen und besonders bevorzugt, die Striche im Wesentlichen als konzentrische Kreise ausgebildet sind. Im Wesentlichen bedeutet in diesem Fall, dass wenigstens die Hälfte der Kreislinie, bevorzugt wenigstens zwei Drittel, besonders bevorzugt wenigstens elf Zwölftel eine strichkodierte Information trägt.

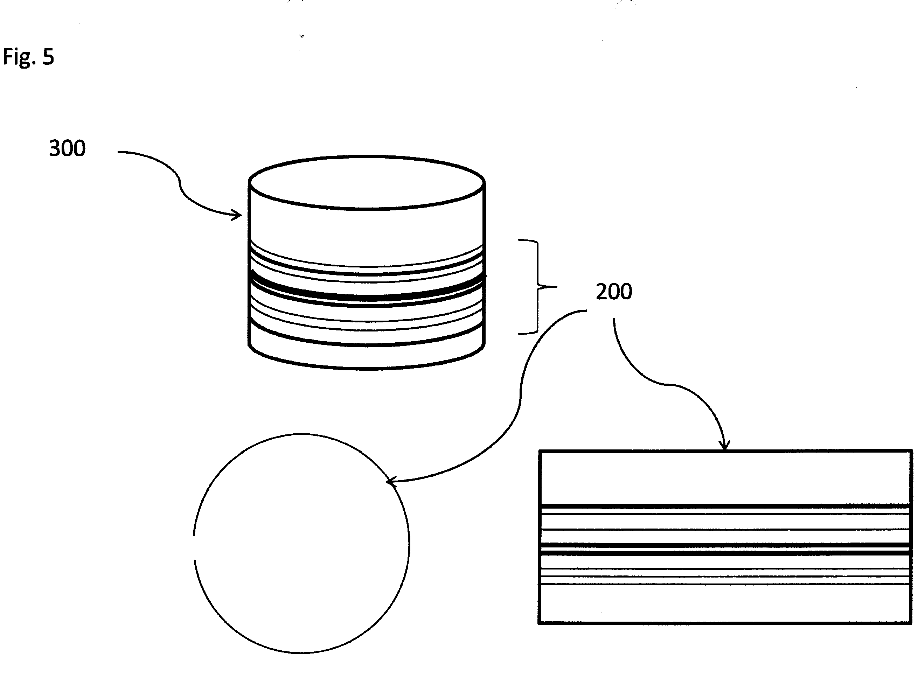

In dem in Figur 4 dargestellten Ausführungsbeispiel, das eine Spraydose 350 als Trägerobjekt 300 zeigt, ist die strichkodierte Information 200 direkt auf die Mantelfläche der Spraydose 350 aufgedruckt. Die Strichmuster der strichkodierten Information 200 sind dabei als konzentrische Kreise ausgeführt und folgen dem Umfang der Mantelfläche. Typischerweise weisen Spraydosen 350 im Bereich der Mantelfläche einen Falz auf, der eine Nahtstelle des Spraydosengehäuses repräsentiert. Im dargestellten Ausführungsbeispiel ist die Spraydose 350 in Richtung des Umfangs nahezu vollständig mit der strichkodierten Information 200 bedruckt, wobei lediglich der Falz der Nahtstelle keine Bedruckung aufweist; eine entsprechende Detailansicht ist in Figur 5 gezeigt.

Insbesondere wird in diesem Ausführungsbeispiel deutlich, dass mit Hilfe der Anpassungsmittel eine Veränderung des Erfassungsbereichs 110 in der Art möglich ist, dass ein nicht bedruckter Bereich, also ein Bereich der strichkodierten Information 200, der nicht zur Informationserkennung beiträgt, so übersprungen werden kann, dass eine Redundanzinformation gesucht bzw. ermittelt wird.

Darüberhinaus kann im Rahmen einer Weiterbildung auch vorgesehen sein, dass die strichkodierte Information 200 mit Hilfe eines Aufklebers auf der Oberfläche des Trägerobjekts 300 angebracht ist. Beispielsweise kann so auch der Bereich des Falzes einer Spraydose mit einer strichkodierten Information versehen werden, sodass eine Anordnung der strichkodierten Information 200 in vollständig geschlossenen konzentrischen Kreisen möglich ist und die sichere Identifikation eines Behälters für Pflegemittel gegeben ist.

In einem bevorzugten Ausführungsbeispiel liegt die strichkodierte Information 200, in konzentrischen Kreisen angeordnet, so vor, dass ein erster, bevorzugt unterer Teil der konzentrischen Kreise eine strichkodierte Information 200 repräsentiert, während ein zweiter, bevorzugt oberer Teil der konzentrischen Kreise einen identische Information repräsentiert und so redundante Information zur Verfügung stellt.

Den Gedanken der Benutzung von Redundanzinformation weiter unterstützend, kann in einer Weiterbildung des Erfindungsgedankens ein Verfahren zur Erkennung von strichkodierter Information 200 auf einer Spraydose 350 die folgenden Schritte umfassen.

Zunächst ist, in einem ersten Schritt, die Erkennung einer strichkodierten Information 200 in einem auf einer Spraydose 350 angeordneten Erfassungsbereich 110, sowie die Bewertung der Gültigkeit der Information vorgesehen; in einem weiteren Schritt soll für den Fall, dass keine gültige Information erkannt wurde, der Erfassungsbereich 110 auf der Spraydose 350 verändert werden; schließlich ist in einem nachfolgenden Schritt vorgesehen, die erwähnten Schritte solange zu wiederholen, bis eine gültige Information erkannt wird oder keine weitere Veränderung des Erfassungsbereichs 110 möglich ist.

In einer Weiterbildung des Verfahrens zur Erkennung von strichkodierter Information auf einer Spraydose 350 kann die Veränderung des Erfassungsbereichs 110 durch Drehen bzw. Schwenken der Erfassungsmittel 100 erfolgen.

Details der Figuren 1, 2 und 4 verdeutlichen dieses Verfahren. An einer Anlenkstange 415 angeordnete Erfassungsmittel 100, in diesem Fall ein Barcodescanner mit einer CCD-Leseeinheit, sind mit Hilfe eines Servomotors 400 um einen Winkel α schwenkbar. Der Erfassungsbereich 110 des Barcodescanners ist auf einem Trägerobjekt 300, repräsentiert durch eine Spraydose 350 als Behälter für ein Pflegemittel, so angeordnet, dass eine eindimensional strichkodierte Information 200 vollständig erfasst werden kann. Für den Fall, dass diese Information nicht bewertet werden kann bzw. keine gültige Information erfasst wird, ist vorgesehen den Erfassungsbereich 110 durch Drehen um einen Winkel α zu einem Erfassungsbereich 110a zu verändern. Die strichkodierte Information 200 ist in diesem Fall in Form von nahezu vollständig den Spraydosenumfang bedeckenden konzentrischen Kreisen, in einem unteren Bereich der Spraydose 350 angeordnet. Die Winkelbewegung erfolgt vorzugsweise in einer Kontinuumsrichtung der strichkodierten Information, also in einer Richtung, in der die strichkodierten Informationen, insbesondere Striche, zusammenhängend fortgesetzt sind. In dem beschriebenen Ausführungsbeispiel ist dies eine horizontale Schwenkbewegung und wie unmittelbar ersichtlich ist, kann dadurch eine redundante Information in einem Erfassungsbereich 110a erfasst werden. Lediglich für den Fall, dass die nunmehr erfasste Information des Erfassungsbereichs 110a ebenfalls nicht gültig ist, ist eine neuerliche Schwenkbewegung vorgesehen, die einen zu den beiden bisher ausgewerteten Erfassungsbereichen 110 bzw. 110a unterschiedlichen Erfassungsbereich selektiert. Dies kann solange wiederholt werden, bis eine gültige Information erfasst wird, oder keine weitere Veränderung des Erfassungsbereichs 110 möglich ist.

In dem gezeigten Ausführungsbeispiel können durch die Schwenkbewegung in einer Abfolge mehrere Erfassungsbereiche 110 bzw. 110a nacheinander ausgewählt werden, die nahezu ein Viertel des Spraydosenumfangs bedecken. In einer Weiterbildung kann darüberhinaus vorgesehen sein, dass in einer Linearbewegung, beispielsweise zur Anpassung an verschiedene Durchmesser von Spraydosen 350, der Minimalabstand der Erfassungsmittel 100 gegenüber dem Trägerobjekt 300 anpassbar ist. Dies kann beispielsweise durch eine Linearbewegung einer entsprechend ausgestalteten Anlenkstange 415 realisiert sein, darüberhinaus kann beispielsweise auch die Kombination aus Servomotor 400 und Erfassungsmitteln 100 als zusammenhängendes Bauteil linear bewegt werden.

Dem dargestellten Ausführungsbeispiel weiterhin folgend, erweist es sich als besonders vorteilhaft, wenn es sich bei dem Trägerobjekt 300 für die strichkodierte Information 200 um eine Spraydose 350 für Pflegemittel zur Pflege medizinischer, insbesondere zahnmedizinischer Geräte handelt, da dies eine vereinfachte Ausgestaltung des Pflegegeräts, insbesondere der Zuführung von Pflegemittel zur Folge hat.

Ein zugeordnetes Pflegegerät ist dann bevorzugt dazu ausgebildet, mit Hilfe einer erfmdungsgemäßen Anordnung zur Erkennung einer strichkodierten Information 200 eine Steuerungsinformation zur Durchführung eines Pflegevorgangs für medizinische, insbesondere zahnmedizinische Geräte zu erhalten.

Insbesondere kann vorgesehen sein, dass das Pflegegerät dazu ausgebildet ist, einen Abgleich zwischen der durch die strichkodierte Information identifizierten Steuerungsinformation mit einem, vorzugsweise durch das Pflegegerät identifizierten, zu pflegenden medizinischen bzw. zahnärztlichen Instrument durchzuführen. Das Pflegegerät könnte dazu ausgebildet sein, im Falle einer für das medizinische Instrument unpassenden Steuerungsinformation einen entsprechenden Hinweis, beispielsweise optisch oder akustisch zu gegeben.

In einer Weiterbildung des Erfindungsgedankens ist in einem Verfahren zur Pflege von medizinischen Geräten mit Hilfe eines Pflegegeräts, das eine erfindungsgemäße Anordnung zur Informationserkennung auf einer Spraydose 350 aufweist, vorgesehen, dass die strichkodierte Information 200 ein Pflegemittel für medizinische Geräte kennzeichnet und auf Basis des identifizierten Pflegemittels ein zugeordneter Pflegeablauf ausgewählt wird.

Als Pflegemittel kommen beispielsweise Wasser, Reinigungsmittel vorzugsweise mit Tensiden oder Phosphaten, besonders bevorzugt Reinigungsmittel, die einen pH-Wert oberhalb von 10 aufweisen, sowie Klarspüler bzw. Neutralisatoren mit einem pH-Wert von 3 bis 5, insbesondere in Form von Phosphorsäureester in Frage. Darüberhinaus können auch Öle zur Pflege vorgesehen sein, die beispielsweise dazu ausgebildet sind mit Hilfe von Treibmittel aufgeschäumt zu werden. Bevorzugt ist ein entsprechendes Treibmittel in dem Behälter für Pflegemittel ebenfalls enthalten.

Das Pflegegerät ist vorzugsweise dazu ausgebildet, mit Hilfe der strichkodierten Information die korrekte Anordnung eines oder mehrerer Behälter für Pflegemittel zur Pflege medizinischer bzw. zahnärztlicher Instrumente zu überprüfen. Dabei kann vorgesehen sein, dass das Pflegegerät zunächst ein medizinisches Instrument identifiziert, welches einen bestimmten Pflegeablauf vorauswählt. Nachfolgend kann mit Hilfe der strichkodierten Information der Pflegemittel ein entsprechender Pflegeablauf bestätigt und ausgewählt werden, sodass der vorausgewählte Pflegeablauf startet. Sollte der durch ein medizinisches Gerät vorausgewählte Pflegevorgang nicht mit dem Pflegevorgang korrespondieren, der durch die identifizierten Pflegemittel festgelegt wird, kann ein entsprechender Hinweis an den Benutzer erfolgen. Bevorzugt ist das Pflegegerät dazu ausgebildet, in diesem Fall den Pflegevorgang zu blockieren. Eine Fehlbedienung des Pflegegeräts ist somit wirkungsvoll verhindert.

Letztendlich wird durch die vorliegende Erfmdung eine Anordnung zur Erkennung von strichkodierter Information und ein entsprechendes Verfahren geschaffen, die bzw. das eine wesentliche Verbesserung der Fehlerrate bei der Erkennung einer strichkodierten Information erlaubt. Bei medizinischen Anwendungen ist dies insbesondere von größter Bedeutung, wie dies beispielsweise durch ein entsprechendes Pflegegerät für medizinische Geräte und einem Verfahren zu dessen Anwendung verdeutlicht wird.

Abschließend ist besonders drauf hinzuweisen, dass die Kombination von Merkmalen verschiedener Ausführungsbeispiele oder in Figuren offenbarter Merkmale erfindungsgemäß nicht ausgeschlossen ist.

## Patentansprüche

1. Anordnung zur Erkennung von strichkodierter Information (200) auf einem Trägerobjekt (300),
mit Erfassungsmitteln (100), die dazu ausgebildet sind, strichkodierte Information in einem Erfassungsbereich (110) zu erfassen,
**dadurch gekennzeichnet,**
**dass** die Anordnung Anpassungsmittel aufweist, die dazu ausgebildet sind, den Erfassungsbereich (110) zu verändern.

2. Anordnung zur Erkennung von strichkodierter Information nach Anspruch 1, **dadurch gekennzeichnet,**
**dass** die Anpassungsmittel dazu ausgebildet sind, die räumliche Anordnung der Erfassungsmittel (100) zu variieren.

3. Anordnung zur Erkennung von strichkodierter Information nach einem der vorhergehenden Ansprüche,
**dadurch gekennzeichnet,**
**dass** die Anpassungsmittel dazu ausgebildet sind, die Erfassungsmittel (100) in einem Winkelbereich (α) zu drehen bzw. zu schwenken.

4. Anordnung zur Erkennung von strichkodierter Information nach Anspruch 3, **dadurch gekennzeichnet,**
**dass** die Anordnung einen Servomotor (400) aufweist, der dazu ausgebildet ist, die Erfassungsmittel (100) zu bewegen.

5. Anordnung zur Erkennung von strichkodierter Information nach einem der vorhergehenden Ansprüche,
**dadurch gekennzeichnet,**
**dass** die Erfassungsmittel (100) dazu ausgebildet sind, mehrere Elemente einer strichkodierten Information (200) gleichzeitig zu erfassen.

6. Anordnung zur Erkennung von strichkodierter Information nach Anspruch 5, **dadurch gekennzeichnet,**
**dass** die Erfassungsmittel einen Barcodescanner umfassen, welcher insbesondere eine CCD-Leseeinheit aufweist.

7. Anordnung zur Erkennung von strichkodierter Information nach einem der vorhergehenden Ansprüche,
**dadurch gekennzeichnet,**
**dass** die Anordnung dazu ausgebildet ist, zweidimensional-strichkodierte Informationen (200) zu erfassen und auszuwerten.

8. Anordnung zur Informationserkennung auf einer Spraydose,
mit einer Spraydose (350)
und einer Anordnung zur Erkennung von strichkodierter Information nach einem der vorhergehenden Ansprüche.

9. Anordnung Informationserkennung auf einer Spraydose nach Anspruch 8, **dadurch gekennzeichnet, dass**
die strichkodierte Information (200) wenigstens teilweise eine Anordnung aus konzentrischen Ringen ist.

10. Anordnung Informationserkennung auf einer Spraydose nach Anspruch 9, **dadurch gekennzeichnet, dass**
die strichkodierte Information (200) eine zweidimensional-strichkodierte Information ist.

11. Verfahren zur Informationserkennung auf einer Spraydose mit einer Anordnung zur Informationserkennung auf einer Spraydose (350) nach einem der vorhergehenden Ansprüche 8 bis 10,
umfassend die Schritte:
A) Erkennung einer strichkodierten Information (200) in einem auf der Spraydose (350) angeordneten Erfassungsbereich (110) und Bewertung der Gültigkeit der Information;
B) Veränderung des Erfassungsbereichs (110) auf der Spraydose (350), falls in Schritt A) keine gültige Information erkannt wurde;
C) Wiederholung der Schritte A) und B) solange, bis eine gültige Information erkannt wird oder keine weitere Veränderung des Erfassungsbereichs (110) möglich ist.

12. Verfahren nach Anspruch 11,
**dadurch gekennzeichnet, dass**
die Veränderung des Erfassungsbereichs (110) auf der Spraydose (350) durch Drehen bzw. Schwenken der Erfassungsmittel (100) erfolgt.

13. Medizinisches Pflegegerät,
mit einer Anordnung zur Informationserkennung auf einer Spraydose (350) nach einem der vorhergehenden Ansprüche 8 bis 10,
**dadurch gekennzeichnet, dass**
eine durch die Anordnung zur Erkennung einer strichkodierten Information (200) ausgelesene Information eine Steuerungsinformation zur Durchführung eines Pflegevorgangs für medizinische, insbesondere zahnmedizinische Geräte ist.

14. Verfahren zur Pflege von medizinischen Geräten,
mit einem medizinischen Pflegegerät nach Anspruch 13,
**dadurch gekennzeichnet, dass**
die strichkodierte Information (200) ein Pflegemittel für medizinische, insbesondere zahnmedizinische Geräte, identifiziert, und auf Basis des identifizierten Pflegemittels ein zugeordneter Pflegeablauf ausgewählt wird.
